# EUROPEAN PATENT APPLICATION

(11) **EP 4 353 763 A2**
(43) Date of publication of application: **17.04.2024**
(21) Application number: 23183148.8
(22) Date of filing: 03.07.2023
(51) Int. Cl.: C08G 18/16, C08G 18/18, C08G 18/24, C08G 18/32, C08G 18/48, C08G 18/69, A42B 3/12

(54) **ENERGY ABSORBING MATERIALS, HEAD PROTECTIVE GEAR COMPRISING THE SAME AND METHOD FOR FABRICATING THEREOF**

(30) Priority: 11.10.2022 US 202263379013 P; 01.06.2023 US 202318327124
(71) Applicant: Dacy Pro Limited, Tuen Mun New Territories (HK)
(72) Inventor: Chun Hei Dale, CHAN, Tuen Mun (HK); Bin, XIAO, Shatin (HK); Wing Hung, NG, Shatin (HK)
(74) Representative: Snipe, Benjamin Thomas Fletcher

(57) **Abstract**

The present invention provides a head protective gear comprising a plurality of three-dimensional inserts configured into hollow members made of an energy absorbing material, formulations forming the energy absorbing material, method of preparing the energy absorbing material. The present invention is designed to protect against or at least mitigate both linear and angular impacts exerted on a head section of a wearer of the head protective gear incorporated with the hollow three-dimensional structure made of the energy absorbing material.

## Description

### TECHNICAL FIELD

The present invention relates to an energy absorbing material for use in head protective gear to reduce linear and angular impacts in multiple directions on wearer's head, in particular, a polyurethane-based energy absorbing material configured into a plurality of three-dimensional (3-D) inserts to be disposed on at least an interior surface of the head protective gear adjacent to the wearer's head. The present invention also relates to a method for fabricating the energy absorbing material, the corresponding 3-D inserts, and the head protective gear comprising thereof.

### BACKGROUND

Helmet is a primary head protective gear used in many outdoor activities such as cycling to mitigate head injury. While skull fractures and concussion are the two most common head injuries during cycling, most of the commercially available helmets focus mainly on skull protection and less attentions have been put on concussive injuries. Head injuries resulted from direct impact can be categorized as either linear or angular impact. Head injuries such as skull fracture and intracranial bleeding are caused mainly by linear impact while concussion and diffuse axonal injury (DAI) are mainly associated with angular impact. In real-world accident scenario, most impacts are oblique impacts: the combination of linear and angular impact. Thus, protection against angular injury is as equally important as protection against linear injury.

A cycling helmet comprises an exterior shell and an interior layer (liner or padding). The exterior shell is usually made from a rigid polycarbonate (PC) shell outer part and a flexible expanded polystyrene (EPS) foam inner part. The interior layer displays various designs, and some of which are intended to reduce angular impact.

One conventional design to tackle angular impact was disclosed in US patent number 8,578,520 issued November 2012 by Peter Halldin et al. describing a helmet with an energy absorbing exterior shell and a sliding facilitator located inside the energy absorbing exterior shell. In that patent disclosure, the sliding facilitator is a slip with four fixation members or elastomers. The sliding facilitator is mounted on the helmet device and the slip can move laterally with a certain distance. During impact, the rotational energy can be absorbed by slip-plane sliding motion and fixation members' deformation. However, this invention is designed to reduce rotational impact. The thin slip liner cannot provide sufficient protection against linear impact. In addition, that helmet involves complicated and multiple fabrication processes of the slip liner and fixation members that add fabrication cost.

Another conventional design to tackle angular impact was disclosed in an international patent application publication number WO2017151028 published in September 2017 by Fredrik Hallander et al., which described a pad that is placed around the inside of the helmet. The pad in that patent disclosure is made from a stretchable outer fabric layer, a lubricating silicone gel and a membrane layer in between the gel and the outer layer. The lubricating gel provides shearing motion to reduce oblique impact. The membrane layer has low friction that allows sliding motion with the outer layer during oblique impact. However, it has been reported the helmet with this pad could not provide sufficient angular protection at certain angle, thus prohibiting an all-direction protection.

A further conventional design to tackle angular impact was disclosed in a US patent application publication number US20150047110 published in February 2015 by James A. Chilson et al., which described a honeycomb-shape insert that can be placed around the inside of the helmet. The honeycomb shape of that insert provides high breathability and low density of the helmet. Each honeycomb is hollow that allows collapse and deformation during impact, thereby reducing both linear and angular force. However, no horizontal comparison and solid testing with other rotational prevention technology is provided in the patent disclosure. Thus, the protection performance is still not clear. Also, the honeycomb insert is rigid and may scratch wearer's head, causing discomfort to the wearer. The cellular structure requires high precision molding and thermo-welding technology that add fabrication cost.

A need therefore exists for an improved material and design of the energy absorbing mechanism for use in head protective gear that eliminates or at least diminishes the disadvantages and problems described above.

### SUMMARY OF INVENTION

Accordingly, a first aspect of the present invention provides a head protective gear comprising a plurality of three-dimensional inserts. Exemplarily, the plurality of three-dimensional inserts is made of an energy absorbing material which is a polyurethane-based composite composed of at least two components, a first component of the at least two components comprising one or more isocyanates, one or more chain extenders and optionally plasticizer; a second component of the at least two components comprising at least one hydroxyl-terminated polyol, a catalyst, a blowing agent, a surfactant and a polyolefin. The present head protective gear co-works with the plurality of three-dimensional inserts disposed on at least one surface of the head protective gear to tackle angular impact on the head protective gear, which can reduce the impact of concussion on head section of a wearer.

In certain embodiments, the polyurethane-based composite is formulated to have a density from 0.3 g/cm³ to 0.5 g/cm³.

In certain embodiments, the polyurethane-based composite is formulated to have a transmission force equal to or lower than 30 kN.

In certain embodiments, the at least one surface of the head protective gear includes an interior surface of the head protective gear.

In certain embodiments, the plurality of three-dimensional inserts made of the energy absorbing material is disposed on the interior surface of the head protective gear and is configured into a plurality of hollow members.

In certain embodiments, the plurality of three-dimensional inserts being configured into the plurality of hollow members is by subjecting a homogenous mixture of the first component and the second component to a mold under an elevated temperature, at an elevated pressure and for a duration of time until a "pudding-like" three-dimensional structure is formed.

In certain embodiments, the plurality of hollow members is spatially distributed on the interior surface of the head protective gear.

In certain embodiments, each of the hollow members has identical shape and dimension (i.e., length, width, height, top/base surface area, and/or lateral surface area) to the other.

In other embodiments, some of the hollow members may have different shape and/or dimension from the other hollow members.

In certain embodiments, the shape of one or more hollow members is cylindrical, nearly cylindrical, or frustoconical.

In certain embodiments, each of the cylindrical, nearly cylindrical, or frustoconical hollow members has a top or base surface diameter from about 9.33 mm to about 15 mm.

In certain embodiments, the frustoconical hollow members have a base surface larger than a top surface thereof.

In certain embodiments, the frustoconical hollow members have an average base surface diameter from about 10.67 mm to about 15 mm and an average top surface diameter from about 9.33 mm to about 13.5 mm.

In certain embodiments, each of the cylindrical, nearly cylindrical or frustoconical hollow members has the same lateral surface area as that of the other and a lateral height from about 6 mm to about 10 mm.

In certain embodiments, each of the hollow members has at least one open end and a cavity.

In certain embodiments, one or more hollow members have two opposing open ends.

In certain embodiments, the interior surface of the head protective gear has a foam layer as a base layer supporting the base of the hollow members and the plurality of hollow members is disposed on the foam layer.

In certain embodiments, the foam layer on the interior surface of the head protective gear is made of an expanded polystyrene (EPS) foam.

In certain embodiments, the base layer is configured to be in bowl-shaped or hemispherical shape.

In certain embodiments, the base layer is configured into a strip-like structure.

In certain embodiments, the base layer has a thickness from about 2 mm to about 5 mm.

In certain embodiments, the shortest distance between two adjacent hollow members on the base layer is from about 1 mm to about 2 mm.

In certain embodiments, the base surface of the hollow members faces the interior surface of the head protective gear while the top surface of the hollow members faces the wearer's head.

In certain embodiments, the hollow members are deformable (compressible) against and/or reactive to linear or angular velocity or acceleration resulting from one-, two-, or three-axis of motion exerted on the three-dimensional inserts.

The head protective gear according to various embodiments of the present invention includes, but not limited to, safety helmet, bump cap, cycling helmet, motorcycle helmet, horse riding helmet, and climbing helmet.

A second aspect of the present invention provides a method for fabricating the energy absorbing material described in the first aspect and/or certain embodiments described herein, where the method includes:
providing a first component comprising one or more isocyanates, one or more chain extenders, and optionally plasticizer;
providing a second component comprising at least one hydroxyl-terminated polyol, a catalyst, a blowing agent, and a surfactant, and optionally a polyolefin; and
mixing the first component and the second component in a weight ratio constituting an isocyanate index of at least 100 until a homogenous mixture is obtained.

The polyurethane-based composite as-fabricated according to certain embodiments has a density from 0.3 g/cm³ to 0.5 g/cm³ and/or a transmission force of equal to or lower than 30 kN.

In certain embodiments, the weight ratio between the first component and the second component is not smaller than 1:1. For example, the weight ratio is 1:1.1, 1:1.2, 1:1.3, 1:1.4, 1:1.5.

In certain embodiments, the one or more isocyanates of the first component is/are selected from diphenylmethane diisocyanate, phenylene diisocyanate, toluene diisocyanate, naphthalene diisocyanate, or any mixture thereof.

In certain embodiments, the one or more chain extenders of the first component is/are selected from ethylene glycol, 1,3-propylene glycol, dipropylene glycol,1,4-butanediol, 1,5-pentanediol, 1,6-hexanediol, diethylenetriamine, 1,2-ethanediamine, 1,3-propanediamine, 1,4-butanediamine, 1,5-pentanediamine, 1,6-hexanediamine, or any mixture thereof.

In certain embodiments, the at least one hydroxyl-terminated polyol of the second component comprises one or more hydroxyl-terminated polyether polyols with hydroxyl values ranging from 30 mgKOH/g to 350 mgKOH/g, one or more hydroxyl-terminated polyester polyols with hydroxyl values ranging from 30 mgKOH/g to 350 mgKOH/g, one or more hydroxyl-terminated polyolefin polyols with hydroxyl values ranging from 30 mgKOH/g to 350 mgKOH/g, or any mixture thereof.

In certain embodiments, each of the hydroxyl-terminated polyether polyols, the hydroxyl-terminated polyester polyols, or the hydroxyl-terminated polyolefin polyols has at least two hydroxyl groups.

In certain embodiments, the catalyst of the second component is a compound or a mixture of compounds each containing at least one of the following chemical groups: pyridine, imidazole, piperazine, bis(2-dimethylainoethyl), trimethylamine, triethanolamine, 1,4-diazabicyclo[2.2.2]octane, zinc naphthenate, and dibutyltin dilaurate.

In certain embodiments, the blowing agent of the second component is selected from water.

In certain embodiments, the surfactant of the second component is selected from polysiloxane.

In certain embodiments, the polyolefin is a hydroxyl-terminated polyolefin comprising hydroxyl-terminated polybutadiene (HTPB).

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Other aspects of the present invention are disclosed as illustrated by the embodiments hereinafter.

### BRIEF DESCRIPTION OF DRAWINGS

The appended drawings, where like reference numerals refer to identical or functionally similar elements, contain figures of certain embodiments to further illustrate and clarify the above and other aspects, advantages and features of the present invention. It will be appreciated that these drawings depict embodiments of the invention and are not intended to limit its scope. The invention will be described and explained with additional specificity and detail through the use of the accompanying drawings in which:
**FIG. 1** is a bottom view of a schematic diagram of a head protective gear according to one embodiment of the present invention.
**FIG. 2** is a top view of a schematic diagram of the head protective gear according to the same embodiment as in FIG. 1.
**FIG. 3** is a front view of a schematic diagram of the head protective gear according to the same embodiment as in FIG. 1.
**FIG. 4** is a rear view of a schematic diagram of the head protective gear according to the same embodiment as in FIG. 1.
**FIG. 5** is a left side view of a schematic diagram of the head protective gear according to the same embodiment as in FIG. 1.
**FIG. 6** is a right side view of a schematic diagram of the head protective gear according to the same embodiment as in FIG. 1.
**FIG. 7** is an isometric view of the hollow members on the interior surface of the head protective gear according to the same embodiment as in FIG. 1.
**FIG. 8** is a bottom view of a schematic diagram of the head protective gear according to another embodiment of the present invention.
**FIG. 9** is a top view of a schematic diagram of the head protective gear according to same embodiment as in FIG. 8.
**FIG. 10** is a front view of a schematic diagram of the head protective gear according to same embodiment as in FIG. 8.
**FIG. 11** is a rear view of a schematic diagram of the head protective gear according to same embodiment as in FIG. 8.
**FIG. 12** is a left side view of a schematic diagram of the head protective gear according to same embodiment as in FIG. 8.
**FIG. 13** is a right side view of a schematic diagram of the head protective gear according to same embodiment as in FIG. 8.
**FIG. 14** is an isometric view of the hollow members on the interior surface of the head protective gear according to the same embodiment as in FIG. 8.
**FIG. 15** is an isometric view of the hollow members arranged on a strip-like structure according to one embodiment of the present invention.
**FIG. 16** is an isometric view of the hollow members arranged on a strip-like structure according to another embodiment of the present invention.
**FIG. 17A** schematically depicts a dimension of a hollow member according to one embodiment of the present invention.
**FIG. 17B** schematically depicts a dimension of a hollow member according to another embodiment of the present invention.
**FIG. 18** schematically depicts how the hollow members according to certain embodiments react differently to both linear (left column) and angular (right column) impacts from multiple directions.
**FIG. 19** schematically depicts how angular impact test according to a standard protocol set forth by Research Institutes Of Sweden (RI.SE) on a simulated head section covered by head protective equipment or gear is conducted, where the x-, y-, and z-axes rotational acceleration impact tests are depicted in the first, second and third rows, respectively.
**FIG. 20** shows translational accelerations along x-, y- and z-axes exerted on a simulated head section covered with the head protective gear according to the embodiment as shown in FIGs. 1-7.
**FIG. 21** shows angular accelerations along x-, y- and z-axes exerted on a simulated head section covered with the head protective gear according to the same embodiment as in FIG. 20.
**FIG. 22** shows angular velocities along x-, y- and z-axes exerted on a simulated head section covered with the head protective gear according to the same embodiment as in FIG. 20.
**FIG. 23** shows translational accelerations along x-, y- and z-axes exerted on a simulated head section covered with the head protective gear according to the embodiment as shown in FIGs. 8-14.
**FIG. 24** shows angular accelerations along x-, y- and z-axes exerted on a simulated head section covered with the head protective gear according to the same embodiment as in FIG. 23.
**FIG. 25** shows angular velocities along x-, y- and z-axes exerted on a simulated head section covered with the head protective gear according to the same embodiment as in FIG. 23.
**FIG. 26** shows the angular velocities (rot. vel.) (in rad/s) along x-, y- and z-axes exerted on a simulated head section covered with the head protective gear incorporated with the hollow members according to two different embodiments (4a, 4b) as shown in FIGs. 17A and 17B, respectively (blue and orange bars, respectively) compared with those on the simulated head section covered with a control helmet in the absence of any hollow members (gray bar).
**FIG. 27** shows the angular accelerations (rot. acc.) (in rad/s²) along x-, y- and z-axes exerted on a simulated head section covered with the head protective gear incorporated with the hollow members according to the same embodiments as in FIG. 26 (blue and orange bars, respectively) compared with those on the simulated head section covered with a control helmet in the absence of the hollow members (gray bar).
**FIG. 28** schematically depicts six different strip-like arrangements (5a-5c and 6a-6c) of hollow members arranged according to the two embodiments shown in FIGs. 15 and 16, respectively, and shows hardness (in terms of Shore A) of their corresponding 3-D inserts prepared by three different formulations (A, B and C) according to certain embodiments of the present invention.
**FIG. 29** shows angular velocities (rot. vel.) (in rad/s) along x-, y- and z-axes exerted on a simulated head section covered with the head protective gear incorporated with the strip-like arrangements of hollow members according to the corresponding embodiments (5a-5c) as shown in FIG. 28 (blue, orange and gray bars, respectively) compared with those on the simulated head section covered with a control helmet in the absence of any hollow members (yellow bar).
**FIG. 30** shows angular accelerations (rot. acc.) (in rad/s²) along x-, y- and z-axes exerted on a simulated head section covered with the head protective gear incorporated with the same strip-like arrangements of hollow members used in FIG. 29 (blue, orange and gray bars, respectively) compared with those on the simulated head section covered with a control helmet in the absence of the hollow members (yellow bar).
**FIG. 31** shows angular velocities (rot. vel.) (in rad/s) along x-, y- and z-axes exerted on a simulated head section covered with the head protective gear incorporated with the strip-like arrangements of hollow members according to the corresponding embodiments, 6a-6c, as shown in FIG. 28 (blue, orange and gray bars, respectively) compared with those on the simulated head section covered with a control helmet in the absence of any hollow members (yellow bar).
**FIG. 32** shows angular accelerations (rot. acc.) (in rad/s²) along x-, y- and z-axes exerted on a simulated head section covered with the head protective gear incorporated with the same strip-like arrangements of hollow members used in FIG. 31 (blue, orange and gray bars, respectively) compared with those on the simulated head section covered with a control helmet in the absence of the hollow members (yellow bar).
**FIG. 33** shows results of an oblique impact test on an energy absorbing material made of the polyurethane-based composite (PU) according to certain embodiments of the present invention compared with two conventional energy absorbing materials (expanded polystyrene, or EPS).

Skilled artisans will appreciate that elements in the figures are illustrated for simplicity and clarity and have not necessarily been depicted to scale.

### DETAILED DESCRIPTION OF THE INVENTION

It will be apparent to those skilled in the art that modifications, including additions and/or substitutions, may be made without departing from the scope and spirit of the invention. Specific details may be omitted so as not to obscure the invention; however, the disclosure is written to enable one skilled in the art to practice the teachings herein without undue experimentation.

As used herein, the term "isocyanate index" refers to a ratio of the equivalent amount of isocyanate used relative to the theoretical equivalent amount times 100. A theoretical equivalent amount is equal to one equivalent isocyanate per equivalent OH group. For example, when an isocyanate is reacted with one or more polyols, one NCO group reacts with one OH group. In that example, the number of NCO groups is equal to the number of OH groups, and the result is a stoichiometric NCO : OH ratio of 1.0.

The following examples are intended to assist the understanding of the present invention, but should not be considered limiting the scope of the invention. The scope of the present invention should be defined by the appended claims.

### Example 1- First Formulation of Energy Absorbing Material

In this example, a first formulation of the energy absorbing material comprising a polyurethane-based composite made of two components is provided. A first component of the polyurethane-based composite comprises aromatic diisocyanate and chain extender. In particular, diphenylmethane diisocyanate (MDI) is mixed with dipropylene glycol in a weight ratio of 90:10 to form a first mixture. The first mixture is stirred at room temperature for 4 hours before use.

A second component of the polyurethane composite comprises 4 different polyols, namely polyols A, B, C, and D, where polyol A is a polyether polyol having 2 hydroxyl groups and a hydroxyl value from 100 to 120 mgKOH/g; polyol B is a polyether polyol having 3 hydroxyl groups and a hydroxyl value from 30 to 35 mgKOH/g; polyol C is a polyether polyol having 2 hydroxyl groups and a hydroxyl value from 300 to 350 mgKOH/g; and polyol D is a polyether polyol having 2 hydroxyl groups and a hydroxyl value from 270 to 290 mgKOH/g. Polyol A, B, C and D are first mixed in a weight ratio of 58:30:4:8 to form a polyol mixture before mixing with bis(2-dimethylaminoethyl), trimethylamine, dibutyltin dilaurate, water, silicone oil, and hydroxyl-terminated polybutadiene (HTPB) in a weight ratio of 1:10:25:1:5:40 until a second mixture is obtained, where the weight ratio between the polyol mixture and the rest of the compounds/chemicals is 10:1. The second mixture is further stirred before use.

The first and second components are mixed in a weight ratio of 1:1.3 to form a homogeneous mixture. The homogeneous mixture is then poured into a mold for forming the hollow members with a desired three-dimensional geometry, followed by molding at a pressure of 600 psi under a temperature of 50 °C for 15 minutes in a heated oven. The as-prepared energy absorbing material is configured to have a density of 0.5 g/cm³ and a transmission force of equal to or lower than 15 kN.

### Example 2 - Second Formulation of Energy Absorbing Material

In this example, a second formulation of the energy absorbing material comprising a polyurethane-based composite made of two components is provided. The first component of the polyurethane-based composite comprises aromatic diisocyanate, chain extender, and plasticizer. In particular, diphenylmethane diisocyanate (MDI) is mixed with ethylene glycol, and bis(2-ethylhexyl) phthalate in a weight ratio of 87:7:5 to form a first mixture. The first mixture is stirred at room temperature for 4 hours before use.

The second component of the polyurethane-based composite comprises 2 polyols, namely polyol A and polyol B, where polyol A is a polyether polyol having 2 hydroxyl groups and a hydroxyl value from 270 to 290 mgKOH/g; polyol B is a polyether polyol having 3 hydroxyl groups and a hydroxyl value from 50 to 60 mgKOH/g. Polyol A and polyol B are mixed in a weight ratio of 1:1 before mixing with delayed action catalyst A400, dibutyltin dilaurate, water, surfactant silicone oil and hydroxyl-terminated polybutadiene (HTPB) in a weight ratio of 5:3:1:3:40 until a second mixture is obtained, where the weight ratio between the polyol mixture and the rest of the compounds/chemicals is 15:1. The second mixture is further stirred before use.

The first and second components are mixed in a weight ratio of 1:1.3 to form a homogeneous mixture. The homogeneous mixture is then poured into a mold for forming the hollow members with a desired three-dimensional geometry, followed by molding at a pressure of 600 psi under a temperature of 50 °C for 15 minutes in a heated oven. The as-prepared energy absorbing material is configured to have a density of 0.35 g/cm³ and a transmission force of equal to or lower than 30 kN.

It should be understood that the formulation of the energy absorbing material is not limited to the examples described herein, but can vary according to the needs or requirements for meeting certain standard of personal protective equipment such as the rotational impact testing of helmets by RI.SE (Research Institutes Of Sweden).

### Example 3 - Third Formulation of Energy Absorbing Material

In this example, a third formulation of the energy absorbing material comprising a polyurethane-based composite made of two components is provided. A first component of the polyurethane-based composite comprises aromatic diisocyanate and chain extender. In particular, diphenylmethane diisocyanate (MDI) is mixed with dipropylene glycol in a weight ratio of 90:10 to form a first mixture, which is stirred at room temperature for 4 hours before use.

A second component of the polyurethane composite comprises 4 different polyols, namely polyols A, B, C, and D, where polyol A is a polyether polyol having 2 hydroxyl groups and a hydroxyl value from 100 to 120 mgKOH/g; polyol B is a polyether polyol having 3 hydroxyl groups and a hydroxyl value from 30 to 35 mgKOH/g; polyol C is a polyether polyol having 2 hydroxyl groups and a hydroxyl value from 300 to 350 mgKOH/g; and polyol D is a polyether polyol having 2 hydroxyl groups and a hydroxyl value from 270 to 290 mgKOH/g. Polyol A, B, C and D are first mixed in a weight ratio of 58:30:4:8 to form a polyol mixture before mixing with bis(2-dimethylaminoethyl), trimethylamine, dibutyltin dilaurate, water and silicone oil in a weight ratio of 1:10:25:1:5 until a second mixture is obtained, where the weight ratio between the polyol mixture and the rest of the compounds/chemicals is 10:1. The second mixture is further stirred before use.

The first and second components are mixed in a weight ratio of 1:1.3 to form a homogeneous mixture. The homogeneous mixture is then poured into a mold for forming the hollow members with a desired three-dimensional geometry, followed by molding at a pressure of 600 psi under a temperature of 50 °C for 15 minutes in a heated oven. The as-prepared energy absorbing material is configured to have a density of 0.5 g/cm³ and a transmission force of equal to 40 kN.

Table 1 below compares transmission force of the energy absorbing material prepared according to the formulations of Example 1 and Example 3, where the difference between two formulations is one with a polyolefin (e.g., HTPB in Example 1) whereas the other without the polyolefin (Example 3) in the second component of the polyurethane-based composite.

**Table 1: Transmission force test result between Example 1 and Example 3**

| **Standard** | **Thickness/mm** | **Formulation** | **Transmission force/kN** |
|---|---|---|---|
| EN 1621-1 | 15 | Example 1 with HTPB | 15 |
| EN 1621-1 | 15 | Example 3 without HTPB | 40 |

From the above comparison, it is suggested that polyolefin in the second component plays an important role in enhancing the energy absorbing performance (by significantly lowering the transmission force).

### Example 4 - First Configuration of 3-D Inserts of Energy Absorbing Material on Bowl-shaped Base

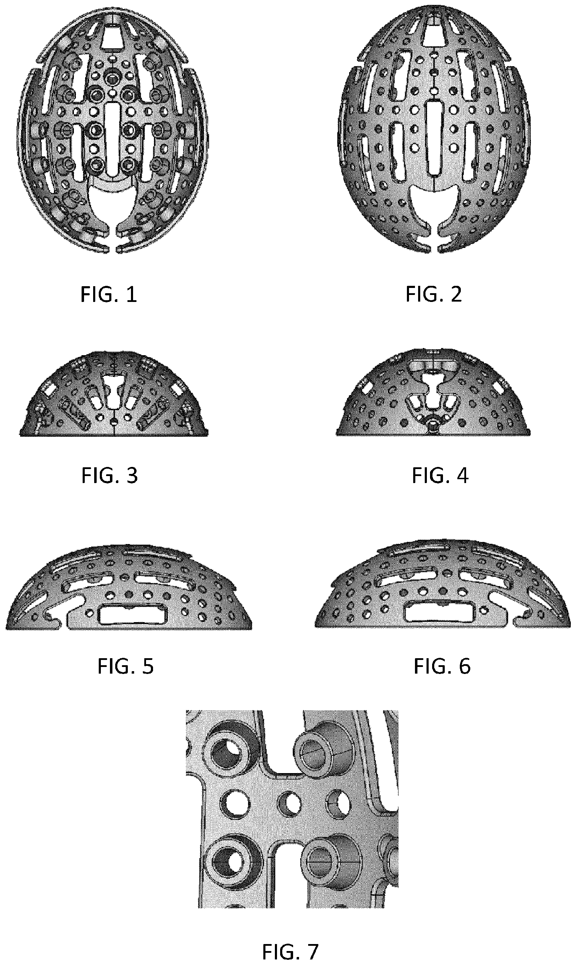

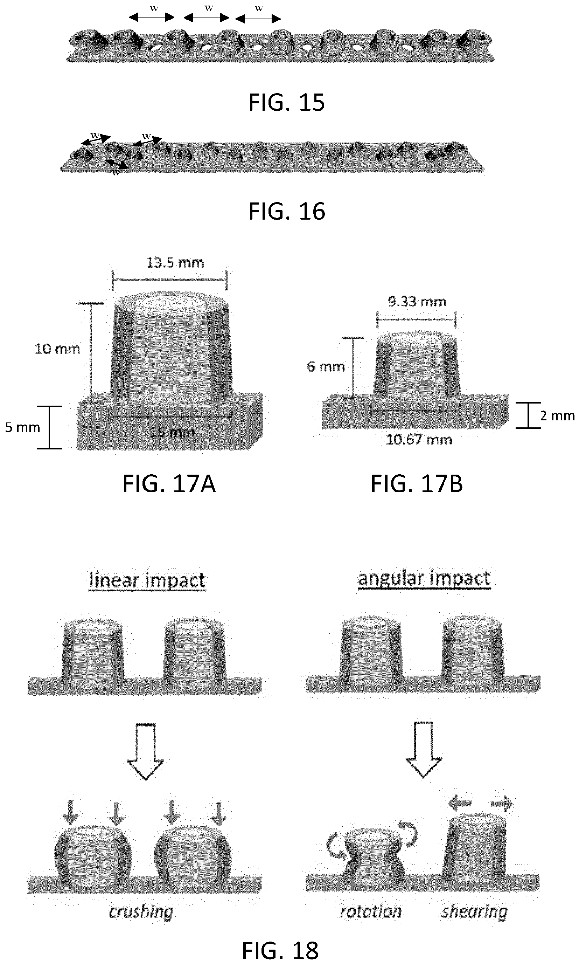

Turning to FIGs. 1-7, ahead protective gear as a helmet is schematically depicted from different orthographic views and an isometric view. As seen from the bottom view in FIG. 1, the interior surface of the helmet is spatially disposed with a plurality of hollow members. From the isometric view in FIG. 7, the hollow member is shown to have a nearly cylindrical shape, i.e., its top surface and base surface are both circular but different in size, or frustoconical. Each of the top surface and base surface is open ended, resulting in a frustoconical structure with a hollow space provided in the center of the hollow member. Each hollow member in this example has a dimension of 13.5 mm (top surface diameter) × 15 mm (base surface diameter) × 10 mm (height). The base of the hollow members is supported by a base layer with a thickness of about 5 mm. An illustration of this configuration and dimension is provided in FIG. 17A. The distance between each pair of two adjacent hollow members varies in this example, ranging from about 5 to 25 mm. A total of 30 hollow members is spatially distributed on the interior surface of the helmet in this example. The hollow members in this example is made of an energy absorbing material prepared according to one of the formulations described hereinafter. In this example, the base layer can be made of EPS and configured to be bowl-shaped or hemispherical. The hollow members can be secured on the base layer by applying an adhesive or moulding with the base layer together. The base layer and the hollow members can be affixed on the interior surface of the helmet by any means including, but not limited to, adhesives such as glue, resin, adhesive tape, or interlocking mechanism such as magic tape or Velcro tape/stick.

### Example 5 - Second Configuration of 3-D Inserts of Energy Absorbing Material on Bowl-shaped Base

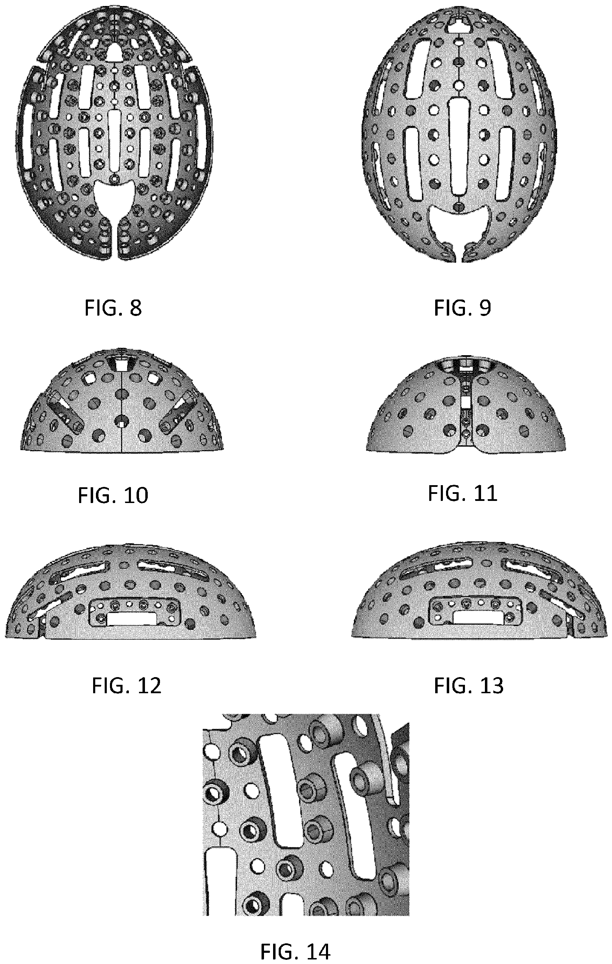

Turning to FIGs. 8-14, another head protective gear in a form of helmet similar to that in Example 1 is schematically depicted from different orthographic views and an isometric view. The interior surface of the helmet in this example is also incorporated with a plurality of hollow members each having a nearly cylindrical or frustoconical shape and two open ends at its top surface and base surface, respectively. The top surface and base surface of each hollow member are circular but different in size. The top surface of each hollow member is 9.33 mm while the base surface thereof is 10.67 mm. Each hollow member has a height of about 6 mm. The base of the hollow members is supported by a base layer with a thickness of about 2 mm. An illustration of this configuration and dimension is provided in FIG. 17B. The distance between each pair of two adjacent hollow members varies in this example, ranging from about 5 to 25 mm. A total of 60 hollow members is spatially distributed on the interior surface of the helmet in this example. Similar to Example 1, the hollow members in this example is made of an energy absorbing material prepared according to one of the formulations described hereinafter; the base layer can be made of EPS and configured to be bowl-shaped or hemispherical; the hollow members can be secured on the base layer by applying an adhesive or moulding with the base layer together; the base layer and the hollow members can be affixed on the interior surface of the helmet by any means including, but not limited to, adhesives such as glue, resin, adhesive tape, or interlocking mechanism such as magic tape or Velcro tape/stick.

### Example 6 - Third and Fourth Configurations of 3-D Inserts of Energy Absorbing Material on Strip-like Base

Apart from bowl-shaped or hemispherical shape, the base layer supporting the base of the hollow members according to certain embodiments can be made into a strip-like structure. Two embodiments of said strip-like structure are schematically depicted in FIGs. 15 and 16, respectively.

In FIG. 15, a total of 9 hollow members on a strip-like base layer is provided, where each hollow member has a dimension of 13.5 mm (top surface diameter) × 15 mm (base surface diameter) × 10 mm (height); the base layer has a thickness of 2 mm. In this configuration, besides the first and the last pairs of hollow members along the strip-like structure, each hollow member in therebetween is evenly spaced apart from an adjacent hollow member (w) by 2 mm.

In FIG. 16, a total of 16 hollow members on a strip-like base layer is provided, where each hollow member has a dimension of 9.33 mm (top surface diameter) × 10.67 mm (base surface diameter) × 10 mm (height); the base layer has a thickness of 2 mm. Different from the configuration as shown in FIG. 15, the hollow members in the configuration as shown in FIG. 16 are arranged alternately in two rows to form a "zig-zag" pattern, where a hollow member on one row is spaced apart from an adjacent hollow member on the other row (w) by 1.5 mm.

FIGs. 17A and 17B schematically depict two frustoconical hollow members including their corresponding base layer. These two hollow members have been used in certain examples of the present invention, but should not be regarded as limiting the dimension of the hollow members in the present invention. In general, the top and base surfaces of the hollow members have the same shape but different sizes. At least one surface (e.g., the top surface) where faces the head section of the wearer of the head protective gear is open-ended, and a cavity is defined in the center of the hollow member. Preferably, two opposing surfaces, i.e., the top and the base surfaces, are open-ended such that a hollow space passes through the center of the hollow member from the top surface to the base surface of the hollow member, leaving a "tube" of the hollow member disposed on the base layer. It should be understood that the shape of the cross-section of the hollow space, or the shape of the top open end, does not necessarily match the shape of the top surface or that of the base surface. That is, the cross-section of the hollow space or the top open end can be circular while the top surface of the hollow member can be non-circular such as ellipse-shaped.

FIG. 18 schematically depicts an exemplary embodiment of the hollow member of the present invention configured into a nearly cylindrical or frustoconical three-dimensional geometry with a circular hollow space passing through the center of the hollow member from the top surface to the base surface of the hollow member. In the left column of FIG. 18, when this nearly cylindrical or frustoconical hollow member is subject to a linear force exerted on the top surface of the hollow member, the hollow members are compressed towards the base layer. Due to the "tube" geometry of the hollow member and the compressible nature of the polyurethane-based composite material forming the hollow member, the lateral sidewall of the hollow member tends to be bent outward and the height of the hollow member is decreased under the exertion of the linear compressive force on its top surface. This suggests one of the characteristics of the present energy absorbing material, crushing behaviour, when being subjected to a linear force. On the other hand, when the exemplary hollow member of the present invention is subject to a non-linear force, e.g., a rotational force exerted in more than one-axis direction around the top surface of the hollow member, the hollow member can counter-act the rotational force by rotation and/or shearing (right column of FIG. 18). This suggests the other characteristics of the present energy absorbing material than the crushing behaviour against the angular impact exerted on the hollow member.

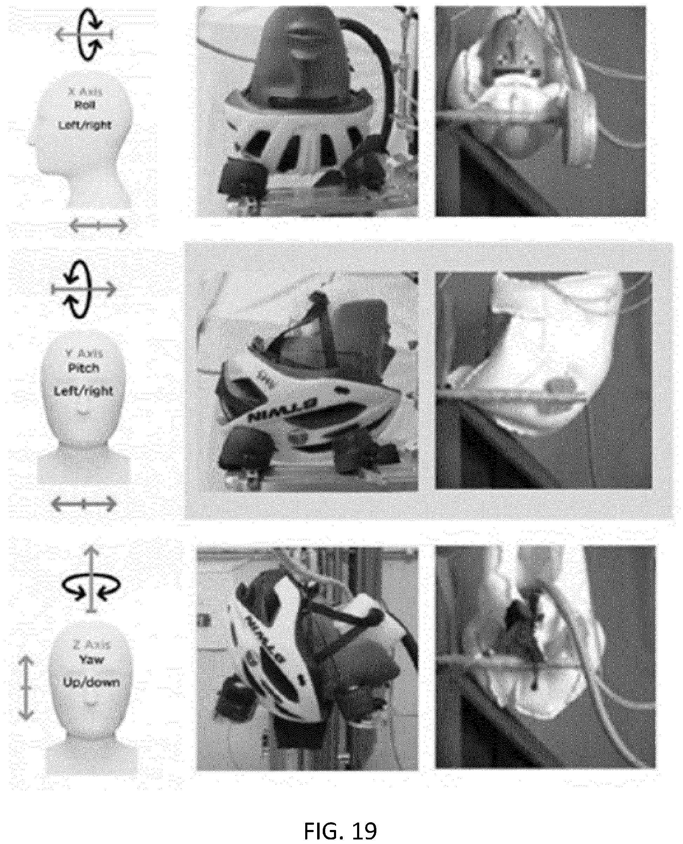

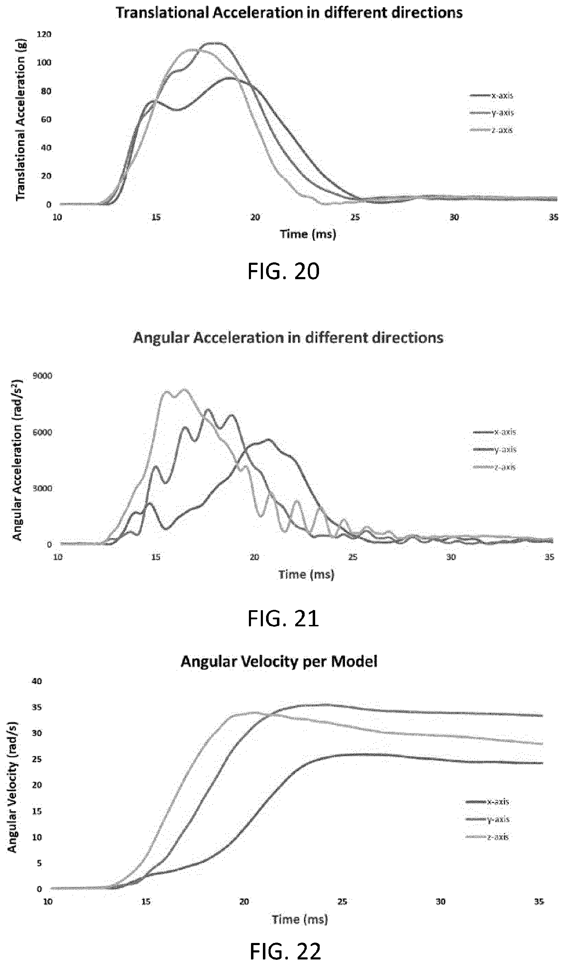

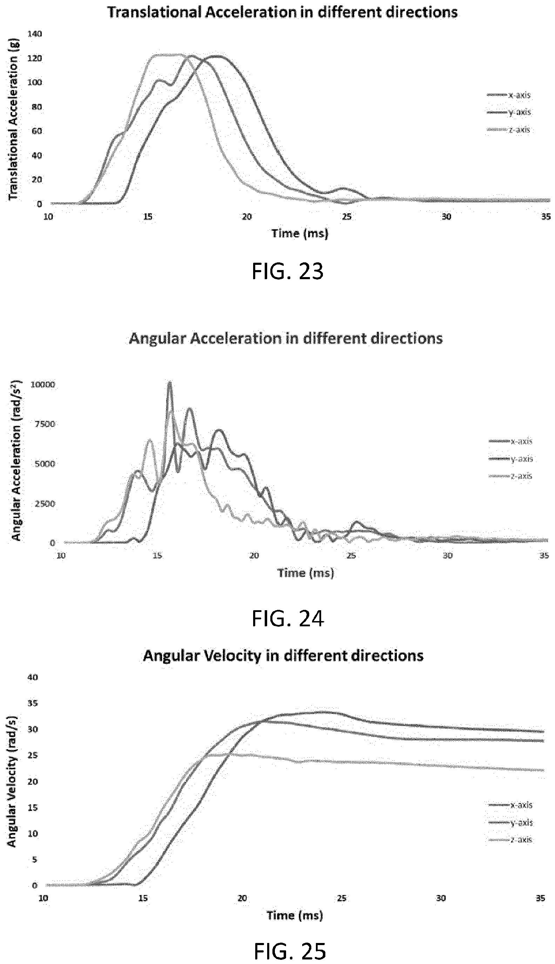

The following examples will provide results of an oblique impact test on different configurations of the three-dimensional inserts of the energy absorbing material according to different embodiments of the present invention in terms of their performance in absorbing and/or reducing translational acceleration (FIGs. 20 and 23), angular acceleration (FIGs. 21, 24, 27, 30 and 32), and angular velocity (FIGs. 22, 25, 26, 29 and 31) exerted on ahead section of a simulated object following the standard protocol of the rotational acceleration testing of helmets set forth by RI.SE (FIG. 19). According to the protocol, the helmet prototype was placed on a simulated head. The helmeted head was subject to free fall vertically to a 45°-inclined anvil at 6.3 m/s at three different contact points which result in rotation along x-, y- and z-axis directions. Upon impact, the peak translational acceleration, angular acceleration and angular velocity were recorded separately with respect to time.

### Example 7 - Reaction Mechanism Against Linear and Angular Impacts by Prototypes 4a and 4b

Turning to FIGs. 20-22, measurements of translational accelerations, angular accelerations, and angular velocities along three different directions (x-, y-, and z-axes) exerted on a simulated head section covered with a prototype of the helmet, namely prototype 4a, as depicted in FIGs. 1-7 which is incorporated with the hollow members having a dimension depicted in FIG. 17A and formed by formulation A of the energy absorbing material are provided.

In FIG. 20, the peak value of translational acceleration along the x-axis exerted on the simulated head section is the smallest, while those along the y- and z-axes are similar. In FIG. 21, the peak value of angular acceleration along the x-axis exerted on the simulated head section is the smallest, followed by that along the y-axis, and the largest is along z-axis. In FIG. 22, the peak value of angular velocity along the x-axis exerted on the simulated head section is the smallest, followed by that along y-axis , and the largest is that along the z-axis.

Turning to FIGs. 23-25, measurements of translational accelerations, angular acceleration, and angular velocities along three different directions (x-, y-, and z-axes) exerted on a simulated head section covered with a prototype of the helmet, namely prototype 4b, as depicted in FIGs. 8-14 which is incorporated with the hollow members having a dimension depicted in FIG. 17B and formed by formulation B of the energy absorbing material are provided.

In FIG. 23, the peak value of translational acceleration along the x-, y- and z-axes are similar. In FIG. 24, the peak value of angular acceleration along the y-axis exerted on the simulated head section is the smallest, followed by that along z-axis, and the largest is that along x-axis. In FIG. 25, the peak value of angular velocity along the z-axis exerted on the simulated head section is the smallest, followed by that along x-axis, and the largest is that along y-axis.

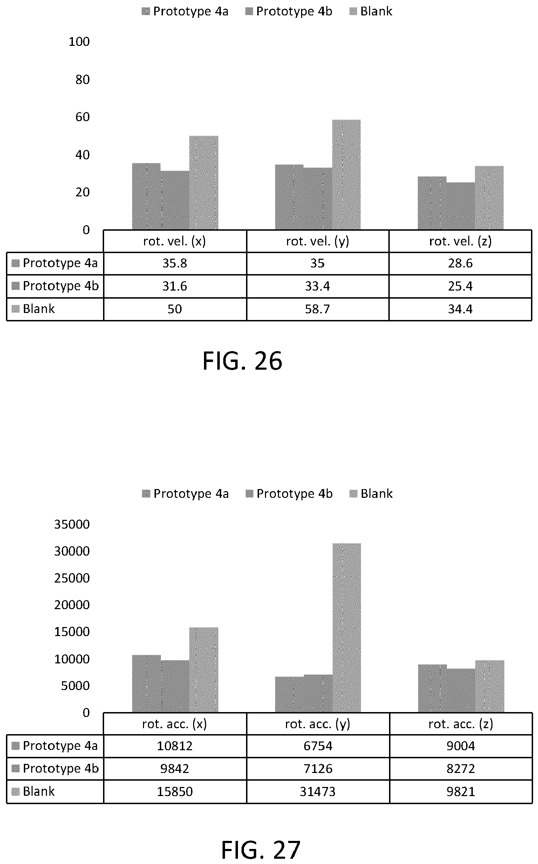

Turning to FIGs. 26 and 27, a comparison of the helmet prototypes 4a and 4b with a control helmet (blank) which does not incorporate any hollow members but only with an EPS foam layer in terms of the rotational velocities (FIG. 26) and rotational accelerations (FIG. 27) exerted on the simulated head section along three different directions (x-, y-, and z-axes) is provided. Overall, prototype 4b which has smaller hollow members in dimension but higher density of hollow members than those in prototype 4a results in lower rotational velocities along three different directions compared with prototype 4a; prototype 4b results in lower rotational accelerations along x- and z-axes than those by prototype 4a, but a slightly higher rotational acceleration along y-axis than that by prototype 4a.

### Example 8 - Reaction Mechanism Against Angular Impact by Prototypes 5a-6c

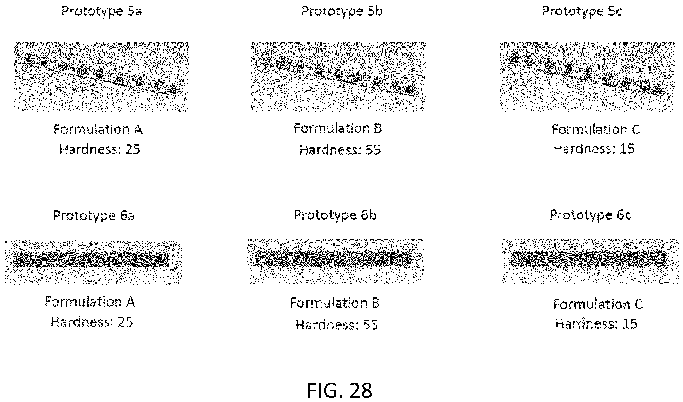

Turning to FIGs. 28-32, six different prototypes of helmet with strip-like arrangement of hollow members are tested with their performance in counter-acting the angular impact (rotational velocities and accelerations) on the simulated head section compared with a control helmet in the absence of any hollow members.

In FIG. 28, the six different prototypes, namely 5a-5c and 6a-6c, provide a strip-like arrangement of the hollow members with reference to the strip-like arrangements depicted in FIGs. 15 and 16, respectively. Prototypes 5a-5c substantially follow the strip-like arrangement depicted in FIG. 15 to arrange the corresponding hollow members formed by three different formulations (A, B and C) of the energy absorbing material, respectively, and according to the dimension depicted in FIG. 17A. Prototypes 6a-6c, on the other hand, follow the strip-like arrangement depicted in FIG. 16 to arrange the corresponding hollow members formed by three different formulations (A, B and C) of the energy absorbing material, respectively, and according to the dimension depicted in FIG. 17B. The hardness of the hollow members formed by different formulations of the energy absorbing material is ranked as follows (in descending order): Formulation B > Formulation A > Formulation C.

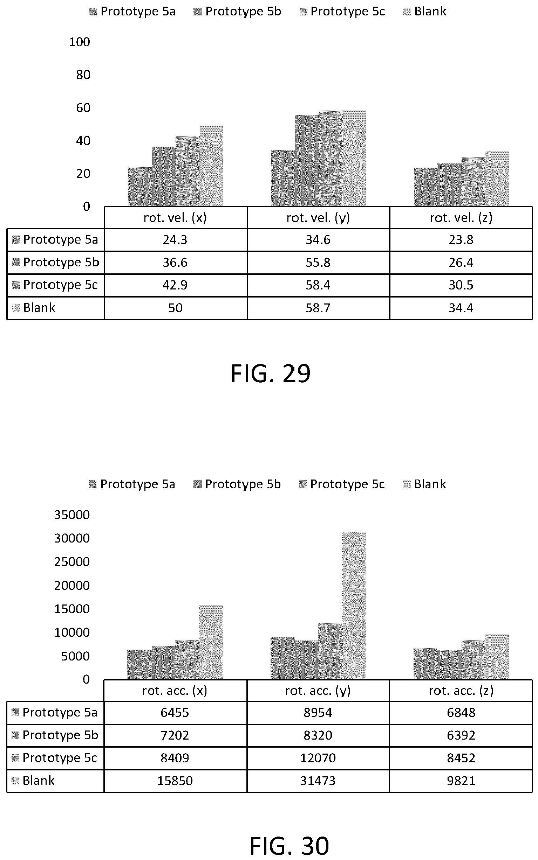

In FIG. 29, prototype 5a results in the smallest rotational velocities along all three directions, followed by prototype 5b, and prototype 5c results in the largest rotational velocities.

In FIG. 30, prototype 5a results in the smallest rotational acceleration along x-axis, followed by prototype 5b, and prototype 5c results in the largest along x-axis. However, prototype 5b results in the smallest rotational accelerations along y- and z-axes, followed by prototype 5a, and prototype 5c results in the largest rotational accelerations along y- and z-axes.

From the results in FIGs. 28 and 29, it can be suggested that the helmet with hollow members of medium hardness (25 N/mm²) has the best performance in reducing both rotational accelerations and velocities along three different directions exerted on the simulated head section over the other two.

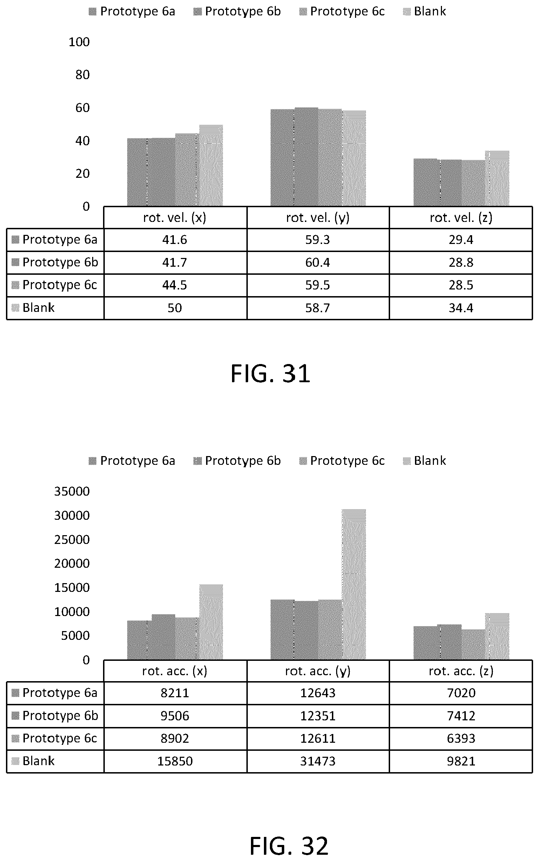

In FIG. 31, prototype 6a results in the smallest rotational velocity along x-axis, followed by prototype 6b which results in slightly larger rotational velocities than prototype 6a, and prototype 6c results in the largest rotational velocity along the x-axis, although the difference is small. Prototype 6c, on the other hand, results in the smallest rotational velocity along z-axis, followed by prototype 6b, and prototype 6a results in the largest, but the difference is small again. Interestingly, prototypes 6a-6c each results in rotational velocity along y-axis higher than that by the control helmet (without any hollow members), although the difference is small.

In FIG. 32, prototype 6a results in the smallest rotational acceleration along x-axis, followed by prototype 6c, and prototype 6b results in the largest along x-axis, although the difference is small. Prototypes 6b and 6c result in similar rotational acceleration along y-axis, and prototype 6a results in the largest, but the difference is very small. Similarly, prototypes 6a and 6b results in similar rotational acceleration along z-axis, while prototype 6c results in the smallest, but the difference is small again. At this time, the control helmet (without any hollow members) results in much larger difference in rotational accelerations along all three directions than that in rotational velocities compared with prototypes 6a-6c observed in FIG. 31.

Table 2 summarizes the measurements of angular (rotational) velocities and accelerations exerted on the simulated head section by different prototypes depicted in FIG 28.

**Table 2:**

| **Prototype** | **Rot. vel (x)** | **Rot. acc (x)** | **Rot. vel (y)** | **Rot. acc (y)** | **Rot. vel (z)** | **Rot. acc (z)** |
|---|---|---|---|---|---|---|
| **5a** | 24 | 6455 | 35 | 8954 | 24 | 6848 |
| **5b** | 37 | 7202 | 56 | 8320 | 26 | 6392 |
| **5c** | 43 | 8409 | 58 | 12070 | 31 | 8452 |
| **6a** | 42 | 8211 | 59 | 12643 | 29 | 7020 |
| **6b** | 42 | 9506 | 60 | 12351 | 29 | 7412 |
| **6c** | 45 | 8902 | 60 | 12611 | 29 | 6393 |
| **Control** | 50 | 15850 | 59 | 31473 | 34 | 9821 |

Overall, prototypes 6a-6c can reduce certain angular impact exerted on the simulated head section, compared with the control helmet, but seem not to be as effective as prototypes. 5a-5c.

In addition, it is suggested that the formulation of energy absorbing material in the present invention with a lower first component to second component weight ratio is generally softer than that with a higher first component to second component weight ratio. In other words, the hardness of the energy absorbing material of the present invention is attributed more to the first component, whereas the softness thereof is attributed more to the second component.

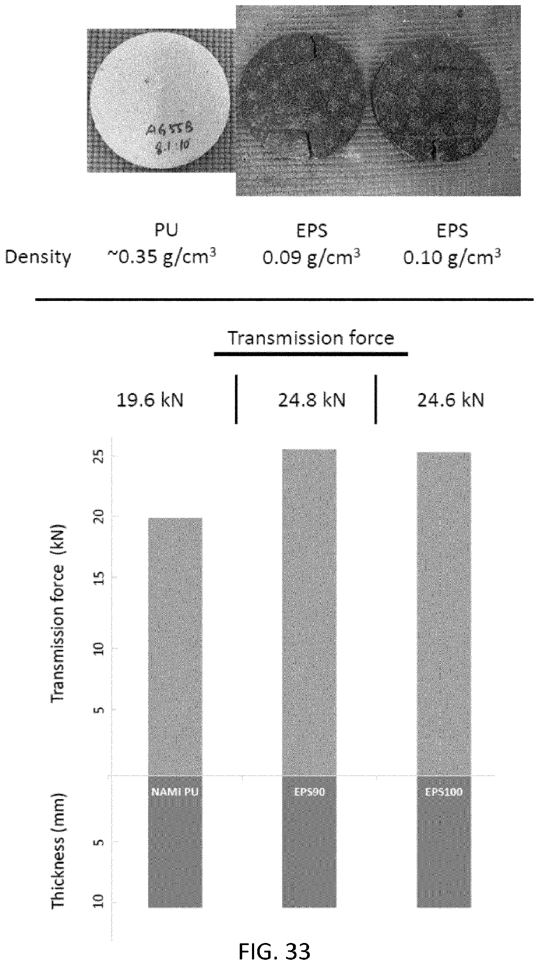

To further compare the protective ability of the energy absorbing material and the EPS foams, and to demonstrate the possibility of replacing certain amount of EPS foams by the energy absorbing material in fabrication process without compromising the protection ability of the head protective gear, the polyurethane-based composite prepared according to one of the embodiments of the present invention with a density of 0.35 g/cm³ is subjected to an impact test and compared with two EPS foams having a density of 0.09 g/cm³ and 0.10 g/cm³, respectively, by measuring the transmission force from the corresponding material. In FIG. 33, with the same thickness of the materials, e.g., 10 mm, and the same magnitude of the impact force applied on the materials, the transmission force measured from the polyurethane-based composite (PU) is 19.6 kN, compared to 24.8 kN and 24.6kN measured from the two EPS foams with a density of 0.09 and 0.10 g/cm³, respectively. These results suggest that the energy absorbing material of the present invention possesses lower energy transmission than that of the EPS foams with the same thickness.

Besides the density of the energy absorbing material itself, the present invention also proposes a hollow configuration of 3-D inserts in a shape of nearly cylindrical or frustoconical formed by the energy absorbing material and a spatial distribution of the inserts on at least the interior surface of the head protective gear to form an energy absorbing layer or pad in order to maximize the energy absorbing potential of the head protective gear. In particular, the impact is usually non-linear on the head section of the wearer when head injury happens in road incidence, sports event, and other occasions such as performing certain statutory duties with potential risks of head injury. Since the surface of the object to be protected, i.e., head, is not a planar surface, and the impact on which usually includes rotations around x-, y-, and z-axes of the head, the proposed hollow 3-D inserts spatially distributed on the interior surface of the head protective gear according to certain embodiments does not only provide a crushing mechanism to counter-act the linear impact, but also other mechanisms such as rotation and shearing to effectively counter-act the angular impact on the head of the wearer, thereby mitigating any potential damages to the wearer's brain and other structures of his/her head.

Although the invention has been described in terms of certain embodiments, other embodiments apparent to those of ordinary skill in the art are also within the scope of this invention. Accordingly, the scope of the invention is intended to be defined only by the claims which follow.

### INDUSTRIAL APPLICABILITY

The present head protective gear comprising the plurality of three dimensional inserts configured into hollow members made of energy absorbing material is not just applicable to bicycle helmet head protective gear, but also to other protective gears for different helmets which function as or require a means to absorb and/or reduce linear and non-linear impacts.

## Claims

1. A head protective gear comprising a plurality of three-dimensional inserts made of an energy absorbing material being a polyurethane-based composite, **characterized in that** the polyurethane-based composite is composed of at least two components, wherein a first component of the at least two components comprises one or more isocyanates, and one or more chain extenders; a second component of the at least two components comprises at least one hydroxyl-terminated polyol, a catalyst, a blowing agent, a surfactant and a polyolefin, wherein the plurality of three-dimensional inserts is disposed on at least an interior surface of the head protective gear forming an energy absorbing layer thereon, and the plurality of three-dimensional inserts is spatially distributed on the at least an interior surface of the head protective gear.

2. The head protective gear of claim 1, wherein the polyurethane-based composite is formulated to have a density from 0.3 g/cm³ to 0.5 g/cm³ and have a transmission force equal to or lower than 30 kN.

3. The head protective gear of claim 1, wherein the plurality of three-dimensional inserts is configured into a plurality of hollow members.

4. The head protective gear of claim 3, wherein the shape of one or more hollow members is cylindrical, nearly cylindrical, or frustoconical.

5. The head protective gear of claim 3, wherein each of the hollow members has at least one open end and a cavity, and wherein a top surface area of the hollow members is smaller than a base surface area thereof.

6. The head protective gear of claim 5, wherein the base surface of the hollow members faces the interior surface of the head protective gear while the top surface of the hollow members faces a wearer's head.

7. The head protective gear of claim 3, wherein the interior surface of the head protective gear has a foam layer as a base layer supporting the base of the hollow members and the plurality of hollow members is disposed thereon, wherein the foam layer has an energy absorbing capability, and wherein the base layer is configured to be in bowl-shaped, hemispherical or a strip-like structure.

8. The head protective gear of claim 3, wherein the hollow members are deformable against and/or reactive to linear or angular velocities or accelerations resulting from one-, two-, or three-axis of motion exerted around the three-dimensional inserts.

9. A method for forming an energy absorbing material, the method comprising:
providing a first component comprising one or more isocyanates, one or more chain extenders, and one or more plasticizers;
providing a second component comprising at least one hydroxyl-terminated polyol, a catalyst, a blowing agent, a surfactant, and a polyolefin; and
mixing the first component and the second component in a weight ratio constituting an isocyanate index of at least 100 until a homogenous mixture is obtained.

10. The method of claim 9, wherein the weight ratio between the first component and the second component is not smaller than 1:1, and the method further comprises subjecting the homogenous mixture to an elevated temperature and an elevated pressure for a duration of time until solidified into a pudding-like structure.

11. The method of claim 9, wherein the one or more isocyanates of the first component is/are selected from diphenylmethane diisocyanate, phenylene diisocyanate, toluene diisocyanate, naphthalene diisocyanate, or any mixture thereof

12. The method of claim 9, wherein the one or more chain extenders of the first component is/are selected from ethylene glycol, 1,3-propylene glycol, dipropylene glycol, 1,4-butanediol, 1,5-pentanediol, 1,6-hexanediol, diethylenetriamine, 1,2-ethanediamine, 1,3-propanediamine, 1,4-butanediamine, 1,5-pentanediamine, 1,6-hexanediamine, or any mixture thereof.

13. The method of claim 9, wherein the at least one hydroxyl-terminated polyol of the second component comprises one or more hydroxyl-terminated polyether polyols with hydroxyl values ranging from 30 mgKOH/g to 350 mgKOH/g, one or more hydroxyl-terminated polyester polyols with hydroxyl values ranging from 30 mgKOH/g to 350 mgKOH/g, one or more hydroxyl-terminated polyolefin polyols with hydroxyl values ranging from 30 mgKOH/g to 350 mgKOH/g, or any mixture thereof, wherein each of the hydroxyl-terminated polyether polyols, the hydroxyl-terminated polyester polyols, or the hydroxyl-terminated polyolefin polyols has at least two hydroxyl groups.

14. The method of claim 9, wherein the catalyst of the second component is a compound or a mixture of compounds each containing at least one of the following chemical groups: pyridine, imidazole, piperazine, bis(2-dimethylainoethyl), trimethylamine, triethanolamine, 1,4-diazabicyclo[2.2.2]octane, zinc naphthenate, and dibutyltin dilaurate.

15. The method of claim 9, wherein the polyolefin is a hydroxyl-terminated polyolefin comprising hydroxyl-terminated polybutadiene (HTPB).
